# EUROPEAN PATENT SPECIFICATION

(11) **EP 3 905 081 B1**
(45) Date of publication and mention of the grant of the patent: **28.01.2026**
(21) Application number: 19905330.7
(22) Date of filing: 13.12.2019
(51) Int. Cl.: G06F 21/32, G06F 21/44, G06F 21/45, G06F 21/73, H04L 9/40, H04W 12/06, H04W 12/63, G06Q 20/32, G06Q 20/40

(54) **METHOD AND DEVICE FOR AUTHENTICATING IDENTITY INFORMATION, AND SERVER**
VERFAHREN UND VORRICHTUNG ZUR AUTHENTIFIZIERUNG VON IDENTITÄTSINFORMATIONEN UND SERVER
PROCÉDÉ ET DISPOSITIF D'AUTHENTIFICATION D'INFORMATIONS D'IDENTITÉ, ET SERVEUR

(30) Priority: 26.12.2018 CN 201811608040
(43) Date of publication of application: 03.11.2021
(73) Proprietor: Xunteng (Guangdong) Technology Co., Ltd., Guangzhou, Guangdong 510000 (CN)
(72) Inventor: JIAN, Weiming, Guangzhou, Guangdong 510000 (CN); PI, Aiping, Guangzhou, Guangdong 510000 (CN); LIANG, Huagui, Guangzhou, Guangdong 510000 (CN); HUANG, Feiying, Guangzhou, Guangdong 510000 (CN); CHEN, Qiurong, Guangzhou, Guangdong 510000 (CN)
(74) Representative: Schulz Junghans Patentanwälte PartGmbB
(86) International application number: PCT/CN2019/125377
(87) International publication number: WO 2020/135114

(56) References cited:
- EP-A1- 3 196 792
- WO-A1-2017/031504
- CN-A- 105 847 253
- CN-A- 105 847 253
- CN-A- 107 079 034
- CN-A- 107 147 608
- CN-A- 107 548 059
- CN-A- 108 243 495
- CN-A- 109 711 133
- US-A1- 2004 148 526
- US-A1- 2007 136 796
- US-A1- 2012 123 944
- US-A1- 2015 350 225

## Description

### Cross-references to Related Applications

This application claims priority of Chinese Patent Application No. CN201811608040.9, titled "An Authenticating Method for Identity Information, and Device and Server therefor", filed with the Chinese Patent Office on 26 December 2018.

### Technical Field

This application relates to the field of identity authentication technology, in particular to an authenticating method for identity information, and device and server therefor.

### Technical Background

With the rapid development of network technology and the emergence of convenient methods such as mobile payment, carrying cash has gradually become history. In the near future, physical identification cards will also be replaced by existing technologies. One may go out conveniently without carrying a physical identification card, which will become a trend.

Identity authentication based on biometrics has been applied in many occasions, but the existing biometrics technology is subject to the influences by conditions such as shooting angle, shooting distance, light direction, light angle, light and dark, and light color etc., which cause large deviations in the face comparison results. Further, there may be two people who look exactly the same in the case of brothers, sisters, twins or persons not related by blood. Therefore, the reliability of biometrics technology needs to be improved.

Citizens' personal identity information belongs to personal privacy and is protected by law. No individual, group or business unit is allowed to save citizens' personal identity information. The illegal storage of personal identity information violates citizens' privacy rights and even leads to personal information leakage, which in turn leads to various social issues. Therefore, the security of identity authentication needs to be improved. Examples of biometric authentication systems of users, which take into account location information of a user device operated by the user, and/or a terminal device which the user accesses, are provided by EP 3196 792 A1, by US 2024/148526, by US 2012/123944, by US 2015/350225 and by WO 2017/031504.

### Summary of the Invention

In view of this, the purpose of this application is to provide an authenticating method for identity information, and device and server therefor, which may effectively protect personal identity information, improve the security, reliability and convenience of identity authentication to enhance user experience.

In order to achieve the foregoing objectives, the technical solutions adopted in the embodiments of the present application are as follows:
In a first aspect, an embodiment of the present application provides an authenticating method for identity information, characterized in that, the method is executed by a server, the server is respectively connected in communication to a target authentication device and a user terminal; the method comprises: receiving a first identity information of a user to be authenticated and identification information of the target authentication device sent by the target authentication device; wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device; performing a legality authentication on the first identity information of the user to be authenticated based on stored first identity information of a legal user and the identification information of the target authentication device;
sending the authentication result to the target authentication device.

With reference to the first aspect, an embodiment of the present application provides the first possible implementation manner of the first aspect, wherein before the receiving the first identity information of the user to be authenticated sent by the target authentication device, the above method further comprises: receiving location information of the user terminal sent by the user terminal; performing a dynamic rasterization processing on the location information of the user terminal to determine a raster where the location information of the user terminal is located.

With reference to the first possible implementation manner of the first aspect, an embodiment of the present application provides the second possible implementation manner of the first aspect, wherein the step of performing the legality authentication on the first identity information of the user to be authenticated based on the stored first identity information of the legal user and the identification information of the target authentication device comprises: performing a dynamic rasterization processing on the location information of the target authentication device to determine a raster where the location information of the target authentication device is located; using the raster where the location information of the target authentication device is located and a raster within a preset range of the raster where the location information of the target authentication device is located as target rasters; finding stored biometric characteristics of each user in the target rasters based on the stored first identity information of the legal user; matching the current biological characteristics of the user to be authenticated with found stored biological characteristics of each user, so as to perform the legality authentication on the first identity information of the user to be authenticated.

With reference to the second possible implementation manner of the first aspect, an embodiment of the present application provides the third possible implementation manner of the first aspect, wherein the step of matching the current biological characteristics of the user to be authenticated with the found stored biological characteristics of each users comprises: determining whether the current biological characteristics are biological characteristics of a living body; if yes, comparing the current biological characteristics of the user to be authenticated with the found stored biological characteristics of each user; if the comparing shows that similarities between a stored biological characteristics and the current biological characteristics are greater than a preset similarity threshold, determining an account corresponding to the stored biological characteristics with similarities greater than the preset similarity threshold as a current user account; if the comparing shows that similarities between a plurality of the stored biological characteristics and the current biological characteristic are greater than the preset similarity threshold, determining each user corresponding to each of the stored biological characteristics with similarities greater than the preset similarity threshold as a plurality of users to be authenticated; performing re-identification on the plurality of the users to be authenticated; wherein the identification comprises confirming a preset number of digits in an identification card and/or a biometric matching.

With reference to the third possible implementation manner of the first aspect, an embodiment of the present application provides the fourth possible implementation manner of the first aspect, wherein the user terminal of the user to be authenticated comprises a user account, and the user account of the user to be authenticated for re-identification is the current user account, and the above method further comprises: sending a request to the user terminal of the current user account to obtain a second identity information of the user; wherein the user terminal comprises the second identity information of the user, and the second identity information of the user comprises a user's name, an identification card number of the user and stored biometrics of the user; when receiving the second identity information of the user sent by the user terminal of the current user account, determining whether the user terminal is set to allow responding to the request; if yes, verifying a legitimacy of the second identity information; if the second identity information is verified to be legal, sending the second identity information to the target authentication device, and generating an identity authentication log; sending the identity information authentication log to the user terminal of the user account.

With reference to the fourth possible implementation manner of the first aspect, an embodiment of the present application provides the fifth possible implementation manner of the first aspect, wherein after sending the request to the user terminal of the current user account to obtain the second identity information of the user, the above method further comprises: verifying the legitimacy of the second identity information through the user terminal of the current user account; if the second identity information is legal, sending the second identity information to the server through the user terminal of the current user account.

With reference to the fourth possible implementation manner of the first aspect, an embodiment of the present application provides the sixth possible implementation manner of the first aspect, wherein the server is further connected in communication with an identity authentication system, and the above method further comprises: if the authentication of the identity information is a second identity authentication request, after verifying that the second identity information is legal, sending the second identity information to the identity authentication system; performing an identity verification on the second identity information through the identity authentication system to obtain an identity verification result; sending the identity verification result to the server through the identity authentication system; if the identity verification result contains information that the second identity information is legal, sending the second identity letter to the target authentication device, and generating an identity information authentication log; sending the identity authentication log to the user terminal of the user account.

With reference to the fourth possible implementation manner of the first aspect, an embodiment of the present application provides the seventh possible implementation manner of the first aspect, wherein the server is further connected in communication with an identity authentication system, and the above method further comprises: registering the second identity information on the user terminal through the identity authentication system.

With reference to the seventh possible implementation manner of the first aspect, an embodiment of the present application provides the eighth possible implementation manner of the first aspect, wherein the step of registering the second identity information on the user terminal through the identity authentication system comprises: receiving the second identity information sent by the user terminal; sending the second identity information to the identity authentication system; performing an identity verification on the second identity information through the identity authentication system; sending an identity verification result of the second identity information to the server through the identity authentication system; if the identity verification result contains information that the second identity information is legal, associating the stored biological characteristics of the user in the second identity information with the user account; sending the legal identity verification result of the second identity information to the user terminal; after receiving the legal identity verification result of the second identity information, the user terminal performs an encryption processing on the second identity information and saves the encrypted second identity information to the user terminal.

In a second aspect, an embodiment of the present application further provides an authentication device for identity information, the device is executed by a server, and the server is respectively connected in communication with a target authentication device and a user terminal; the device comprises: a receiving module configured to receive a first identity information of a user to be authenticated and identification information of the target authentication device sent by the target authentication device; wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device; an authentication module configured to perform a legality authentication on the first identity information of the user to be authenticated based on stored first identity information of a legal user and the identification information of the target authentication device; a sending module configured to send the authentication result to the target authentication device.

With reference to the second aspect, an embodiment of the present application provides the first possible implementation manner of the second aspect, wherein the receiving module is configured to: receiving location information of the user terminal sent by the user terminal; performing a dynamic rasterization processing on the location information of the user terminal to determine a raster where the location information of the user terminal is located.

In a third aspect, an embodiment of the present application provides a server, comprising a processor and a memory; a computer program is stored on the memory, and when run by the processor, the computer program executes the method according to any one of the first aspect to the ninth possible implementation manner of the first aspect.

In a fourth aspect, an embodiment of the present application provides a chip with a program stored on the chip, when run by a processor, the program executes the steps of the method according to any one of the first aspect to the ninth possible implementation manner of the first aspect.

**An** embodiment of the present application provides an authenticating method for identity information, and device and server therefor, through receiving a first identity information of a user to be authenticated and identification information of the target authentication device sent by the target authentication device, performing a legality authentication on the first identity information of the user to be authenticated based on stored first identity information of a legal user and the identification information of the target authentication device to send the authentication result to the target authentication device. The identity information of the user to be authenticated comprises the current biological characteristics of the user to be authenticated, and the current biological characteristics comprise current facial features. The identification information of the target authentication device comprises account information of the target authentication device and the location information of the target authentication device. When the identity information of the user to be authenticated sent by the authentication device is authenticated, it comprises the authentication of the current biological characteristics in the identity information, and takes into account the influence of the target authentication device's identification information on the current biometric authentication, which may effectively protect personal identity information, improve security, reliability and convenience of identity authentication, and enhance user experience.

Other features and advantages of the present application will be described in the following description, and partly become obvious from the description or understood by implementing the present application. The purpose and other advantages of the application are realized and obtained by the structures specifically pointed out in the description, claims and figures.

In order to make the above-mentioned objectives, features and advantages of the present application more obvious and understandable, the preferred embodiments and accompanying figures are described in detail as follows.

### Description of the Figures

In order to more clearly illustrate the specific embodiments of the application or the technical solutions in the prior art, the following will briefly introduce the figures that need to be used in the description of the specific embodiments or the prior art. Obviously, the figures in the following description are some embodiments of the present application. For those of ordinary skill in the art, other figures may be obtained based on these figures without any inventive work.
Figure 1 shows a flowchart of an authentication method for identity information provided by an embodiment of the present application;
Figure 2 shows a flowchart of another authenticating method for identity information provided by an embodiment of the present application;
Figure 3 shows a structural block diagram of an authentication device for identity information provided by an embodiment of the present application;
Figure 4 shows an illustrative structural diagram of a server provided by an embodiment of the present application.

### Embodiments

In order to make the purpose, technical solutions and advantages of the embodiments of this application clearer, the technical solutions of this application will be described clearly and completely in conjunction with the accompanying figures. Obviously, the described embodiments are part of the embodiments of this application, not all of the embodiments. Based on the embodiments in this application, all other embodiments obtained by those of ordinary skill in the art without inventive work shall fall within the protection scope of this application.

The existing biometrics technology is subject to the influences by conditions such as shooting angle, shooting distance, light direction, light angle, light and dark, and light color etc., which cause large deviations in the face comparison results. Further, there may be two people who look exactly the same in the case of brothers, sisters, twins or persons not related by blood. Therefore, the reliability of biometrics technology needs to be improved. Citizens' personal identity information belongs to personal privacy and is protected by law. No individual, group or business unit is allowed to save citizens' personal identity information. The illegal storage of personal identity information violates citizens' privacy rights and even leads to personal information leakage, which in turn leads to various social issues. The security of identity authentication needs to be improved. Based on this, an authenticating method for identity information, and device and server therefor provided by the embodiments of the present application may effectively protect personal identity information, improve security, reliability, and convenience of identity authentication, and enhance user experience.

In order to facilitate the understanding of this embodiment, an authentication method for identity information disclosed in the embodiment of the present application is first introduced in detail.

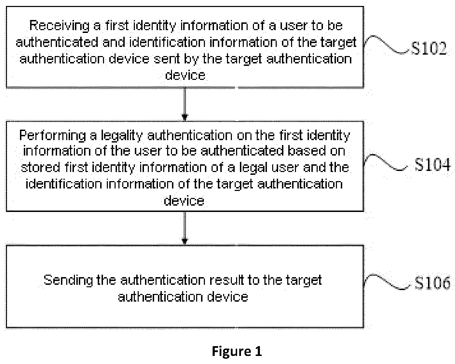

Referring to the flowchart of an authentication method for identity information shown in Figure 1, the method is executed by a server such as a computer, the server is respectively connected in communication to a target authentication device and a user terminal, the method comprises the following steps:
Step S102: receiving a first identity information of a user to be authenticated and identification information of the target authentication device sent by the target authentication device; wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device.

The target authentication device may be a self-service terminal (e-government self-service terminal, e-bank self-service terminal, electronic tax self-service terminal, hotel check-in self-service terminal, ATM (Automatic Teller Machine) machine, queuing machine , number picking machine, self-service printing machine, self-service invoice machine, self-service ticket collection machine and self-service settlement machine etc.), a shared device, a smart robot, a smart car, a drone, an identity authentication machine, a member and VIP identification device, a smart access control, an identity authentication equipment such as an intelligent video intercom equipment and an intelligent gate etc.

In addition to mobile phones, the user terminal may also be a personal mobile device such as a notebook computer, a tablet computer, a smart watch, a smart bracelet, a smart glass, a smart earplug, and a smart button-type device etc.

Biological characteristics comprise one or multiple of facial biometrics, iris biometrics, scleral biometrics, eye print biometrics, palm vein biometrics, palm print biometrics, finger vein biometrics, ear print biometrics, and voice print biometrics.

When the biological characteristics are facial characteristics, the current biological characteristics of the user to be authenticated are facial biometrics, comprising: a human face biological characteristic or a human face biological characteristic combined with facial expression information.

When the biological characteristics are facial characteristics, the current biological characteristics stored by the user are facial biometrics, comprising: a face biological characteristic, a face biological characteristic combined with facial expression information, a human face biological characteristic, or a human face biological characteristic combined with facial expression information.

One or more positioning technologies, BDS (BeiDou Navigation Satellite System), GPS (Global Positioning System), LBS (Location Based Service), AGPS (Assisted Global Positioning System), GSM (Global System for Mobile communications), IP (Internet Protocol) address positioning and WIFI (Wireless Fidelity), etc. may be set manually for location positioning to obtain the location information of the target authentication device.

For example, when a user picks up a ticket at a high-speed railway station at the self-service terminal of the high-speed railway station, if the user needs to use the self-service terminal to handle the ticket collection service, the user is a user to be authenticated, and the user to be authenticated needs to be authenticated to proceed with the next step of business processing. The user to be authenticated may operate according to the prompt information provided by the interactive interface of the target authentication device. For example, if the option to collect biometrics is selected, the target authentication device may collect the user's current biometrics, such as current facial characteristics, including current human facial characteristics and/or current human facial characteristics combined with the facial expression information of the human body. The above-mentioned information collected by the target authentication device is used as the first identity information of the user to be authenticated, and the first identity information of the user to be authenticated is sent to the server through the target authentication device.

Step S104: performing a legality authentication on the first identity information of the user to be authenticated based on stored first identity information of a legal user and the identification information of the target authentication device.

The server stores the identity information of legal users, including stored biometrics. Legal users include users who have passed the authentication of the Ministry of Public Security through the user information entered on the user terminal. These authenticated users store the biometric characteristics of the input user terminal and the identification information of the user terminal in the user terminal and send them to the server by the user terminal for storing in the server. The server may also obtain the location information of the target authentication device sent by the target authentication device, and dynamically rasterize the location information of the target authentication device to determine the raster where the location information is located. According to the raster where the location information of the target authentication device is located, the location of the user corresponding to the legal user's identity information stored in the server is determined to conform to a preset raster range. The server compares the identity information of the user to be authenticated with the identity information of the user conforming to the preset raster range to determine the legitimacy of the identity information of the user to be authenticated.

One or more positioning technologies, such as BDS, GPS, LBS, AGPS, GSM, IP, WIFI, and gyroscope positioning, may be used for location positioning to obtain the location of the user.

Step S106: sending the authentication result to the target authentication device.

After the server determines the legitimacy of the identity information of the user to be authenticated, it sends the authentication result to the target authentication device. If the authentication result contains information that the identity information of the user to be authenticated is legal, the user to be authenticated passes the authentication, and the target authentication device allows the user to be authenticated to perform the next step of business handling operations. If the user to be authenticated fails to pass the authentication, the target authentication device does not allow the user to be authenticated to perform subsequent operations.

For example, when a user picks up a ticket through a self-service terminal at a high-speed rail station, at this time, the self-service terminal of the high-speed rail receives the authentication result from the server. If the authentication result contains legal information such as the name and identification card number of the user to be authenticated, the user to be authenticated is authenticated. The self-service processing terminal allows the user to perform the next step of the ticket collection operation; at this time, the business processing terminal obtains the legal identity information of the user, which achieves the effect equivalent to a machine-readable physical identification card, and performs "real-name, real-person and real evidence" certification results. If the user to be authenticated fails to pass the authentication, the self-service terminal does not allow the user to perform subsequent ticket collection operations.

The above-mentioned authentication method for identity information provided by the embodiment of the present application receives the first identity information of the user to be authenticated sent by the target authentication device, and based on the stored first identity information of the legal user and the identification information of the target authentication device, the first identity information of the user to be authenticated is legally verified, thereby sending the authentication result to the target authentication device. The first identity information of the user to be authenticated includes the current biometrics of the user to be authenticated, and the current biometrics includes the current facial characteristics. The identification information of the target authentication device includes the account information of the target authentication device and the location information of the target authentication device. Since the server authenticates the identity information of the user to be authenticated sent by the target authentication device, it includes authenticating the current biometrics in the identity information, and takes into account the influence of the target authentication device's identification information on the current biometric authentication, which may effectively protect personal identity information, improve security, reliability and convenience of identity authentication, and enhance user experience.

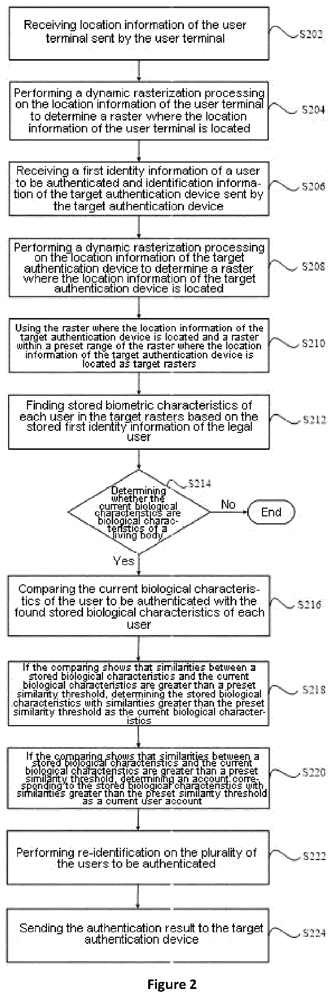

For ease of understanding, another authentication method for identity information based on this embodiment is given below. Referring to the flowchart of an authentication method for identity information as shown in Figure 2, the method includes the following steps:
Step S202: receiving location information of the user terminal sent by the user terminal.

Step S204: performing a dynamic rasterization processing on the location information of the user terminal to determine a raster where the location information of the user terminal is located.

According to the dynamic raster management technology, the raster where the received position information of the user terminal is located may be determined.

Step S206: receiving a first identity information of a user to be authenticated and identification information of the target authentication device sent by the target authentication device; wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device.

The target authentication device includes a camera, and the current biological characteristics of the user to be authenticated are collected through the camera of the target authentication device.

If the target authentication device pre-stores a living body biological characteristic determination method, the living body biological characteristic determination method is used to determine whether the current biological characteristic of the user to be authenticated is alive; if it is judged to be non-living, the target authentication device does not send the user's first identity Information and identification information of the target authentication device to the server.

Step S208: performing a dynamic rasterization processing on the location information of the target authentication device to determine a raster where the location information of the target authentication device is located.

According to the dynamic raster management technology, the server performs dynamic rasterization processing on the location information of the target authentication device, and determines the raster where the location information of the target authentication device is located.

Step S210: using the raster where the location information of the target authentication device is located and a raster within a preset range of the raster where the location information of the target authentication device is located as target rasters.

The preset range may be pre-stored in the server, and the server determines the target raster according to the pre-stored preset range.

Step S212: finding stored biometric characteristics of each user in the target rasters based on the stored first identity information of the legal user.

The server searches for user terminals whose locations are in the target raster, and searches the stored biological characteristics of each user corresponding to each user terminal in the target raster according to the searched user terminals.

Step S214: determining whether the current biological characteristics are biological characteristics of a living body; if so, step S216 is executed; if not, ends.

The current biological characteristics may be determined according to the method for determining the biological characteristics of the living body stored in advance.

Step S216: comparing the current biological characteristics of the user to be authenticated with the found stored biological characteristics of each user.

Step S218: if the comparing shows that similarities between a stored biological characteristics and the current biological characteristics are greater than a preset similarity threshold, determining the stored biological characteristics with similarities greater than the preset similarity threshold as the current biological characteristics.

If only one of the user's stored biological characteristics in the target raster has similarities with the current biological characteristics greater than the preset similarity threshold, it means that there is one and only one biometric among the user's stored biological characteristics in the target raster may be matched with the current biological characteristics, and the biological characteristic whose similarities are greater than the preset similarity threshold is determined as the current biological characteristic.

Step S220: if the comparing shows that similarities between a stored biological characteristics and the current biological characteristics are greater than a preset similarity threshold, determining an account corresponding to the stored biological characteristics with similarities greater than the preset similarity threshold as a current user account.

Step S222: performing re-identification on the plurality of the users to be authenticated; wherein the identification comprises confirming a preset number of digits in an identification card and/or a biometric matching.

It may be that the server sends a reminder to the target authentication device to confirm the identity again, and the target authentication device prompts the user to be authenticated to re-identify according to the reminder sent by the server, such as prompting the user to be authenticated to enter the number of preset digits in the identification card and/or input mobile phone number, perform biometric confirmation of iris, sclera, finger vein, palm vein, palm print, eye print, ear print, voice print, etc., to confirm that the account corresponding to the biometric characteristics whose similarities are greater than the preset similarity threshold is the current user account.

In one embodiment, the server sends a request to the user terminal of the current user account to obtain the user's second identity information; wherein the user terminal has the user's second identity information, and the user's second identity information includes the user's name, the user's second identity information, and identification number and biometrics that the user has stored. When the server receives the user's second identity information sent by the user terminal of the current user account, it determines whether the user terminal is set to allow responding to the request, and verifies the validity of the second identity information. If the user terminal is allowed to respond to the request and the second identity information is legal, the server sends the second identity information to the target authentication device and generates an identity authentication log through the server, and the server sends the identity information authentication log to the user terminal of the user account.

Specifically, after the server sends a request to the user terminal of the current user account for obtaining the second identity information of the user, the user terminal of the current user account verifies the legitimacy of the second identity information; if the second identity information is legal, the second identity information is sent to the server through the user terminal of the current user account.

In an embodiment, the server is also connected in communication with the identity authentication system, the above method further comprises: registering the second identity information of the user terminal through the identity authentication system, the server receives the second identity information sent by the user terminal, sending the second identity information to the identity authentication system; performing identity verification on the second identity information through the identity authentication system, and sending the identity verification result of the second identity information to the server; if the identity verification result contains information that the second identity information is legal, the server associates the user biometrics in the second identity information with the user account, and sends the identity verification result that the second identity information is legal to the user terminal; after the user terminal receives the identity verification result that the second identity information is legal, it encrypts the second identity information and saves the encrypted second identity information to the user terminal. The aforementioned encryption processing may be a preset encryption method, and the second identity information is encrypted according to the preset encryption method.

Step S224: sending the authentication result to the target authentication device.

If the authentication result contains information that the user to be authenticated passes the authentication, the target authentication device allows the user to be authenticated to perform the next step of business handling operations; if the user to be authenticated does not pass the authentication, the target authentication device does not allow the user to be authenticated to perform subsequent operations.

In one embodiment, before the user uses the target authentication device for identity authentication, the user needs to download the corresponding APP on the user terminal, install and open it; register in the APP, and obtain a user's unique identification number, that is, the above identification information of the user terminal; click on the identification card information entry page, enter name and ID number etc. (specifically the interface requirements of the Public Security Department); enter personal photo image information, which may be static images, live images and live biological characteristics; The Public Security Department's identity authentication interface specification sends the user's name, ID number and personal photo image information to the identity authentication interface for identity authentication; if the authentication is passed, the above personal photo image information is associated with the user's unique ID number and saved in the server database; the authenticated message is sent to the user APP, and the APP encrypts the user's unique ID number and the user's name, ID number, personal photo and image information and other information, and perform encryption processing and save the encrypted information after encryption processing in the storage unit of the user terminal. The storage unit may be a file, a database, a dedicated chip etc.; the hardware ID information of the user terminal is added to the encrypted information to prevent tampering.

Further, if the identity authentication interface uses the identity authentication interface provided for the network ID card CTID, the user's unique CTID code may be downloaded and saved in the user terminal; if the local device uses the electronic ID card elD, the hardware information of the elD may be bound and stored in the user terminal; the user may click "authorize" or "unauthorized" in the authorization options of the APP to determine whether the user's identity information is allowed to be read; in the above process , the server only stores the user's face information and the user's unique ID number, that is, the above-mentioned biological characteristics and user terminal identification information are stored in the server, but the user's name, ID number and other personal identification information are not stored.

The server determines the user account of the user to be authenticated, which is the identification information of the aforementioned user terminal, and sends the user account to the APP of the user terminal to request the user's identity information; after receiving the request, the APP of the user terminal first determines whether the user has authorized the permission to read the identity information; then determines whether the user has complete identity information; then determines whether the identity information stored in the user terminal is legal, including: determining whether the information has been tampered with, determining whether the unique ID number of the user is consistent and whether it is consistent with the hardware ID information of the user terminal. If the user has authorized the authority to read the identity information and the identity information of the user terminal is legal, the APP sends the identity information of the user terminal to the server. If the above-mentioned user terminal adopts the electronic ID card elD, it is determined whether it is consistent with the hardware information bound to the elD.

After the server receives the identity information of the user terminal sent by the APP, it first determines whether the user's unique ID number is consistent, and then determines whether the personal photo image information is consistent. For general services (for example, identity authentication for entering a residential area and queuing for number collection etc.), the server may directly send the user's identity information to the target authentication device to complete the identity authentication and identity information acquisition operation, and generate the identity authentication record and send the generated identity authentication record to the APP of the user terminal; for services with a higher security level (for example, entry and exit identity authentication and ATM machine withdrawals without bank cards etc.), the server needs to perform secondary identity authentication, then send the user's name, ID number, and on-site photos taken by the self-service terminal, that is, the above-mentioned current biological characteristics (the specific content is determined by the identity authentication interface specification) to the identity authentication interface for identity authentication. If the secondary identity authentication is passed, then send the user's identity information to the target authentication device to complete the identity authentication and identity information acquisition operation, and generate the identity authentication record and send the generated identity authentication record to the APP of the user terminal, wherein if the identity authentication interface provided by the network ID card CTID is used, and the user information contains the user's unique CTID code, the user's CTID code and the on-site photo taken by the self-service terminal will be sent during the second identity authentication. The above-mentioned current biological characteristics (the specific content is determined according to the identity authentication interface specification) are sent to the corresponding identity authentication interface to determine whether the secondary identity authentication is passed.

In summary, in the above-mentioned identity information authentication method provided by the embodiments of the present application, the identity information of the user to be authenticated comprises the current biological characteristics of the user to be authenticated, and the current biological characteristics comprise the current facial characteristics, and the identification information of the target authentication device comprises the account information of the target authentication device and the location information of the target authentication device. Since the server authenticates the identity information of the user to be authenticated sent by the target authentication device, it authenticates the current biometrics in the identity information of the user to be authenticated according to the raster where the location information of the target authentication device is located, and taking into account of the influence of the identification information of the target authentication device on the current biometric authentication, the rasterization technology effectively reduces the number of biometric comparisons and speeds up the comparison, and reduces the investment in hardware equipment, effectively improve the accuracy of biometric comparison and the security of identity authentication; taking into account the security and legality of personal information, save their personal information through the user's device, and pass the legal verification of the identity information to prevent tampering, which protects personal identity information effectively; realize the reliability of identity authentication through the authority of the identity authentication system of the Public Security Department; based on this, users may achieve the same effect as a machine-readable physical identification card without carrying a physical ID card, and complete the identity verification of "real name, real person and real evidence" to improve the convenience of travel and realizes the convenience of identity authentication; further, because there is no need to take out physical identification cards and mobile phones and other physical objects, there is also no need to enter the ID number and mobile phone number and other operations, and the effect of the machine-readable ID card is directly completed through biometrics, which effectively enhances the user experience.

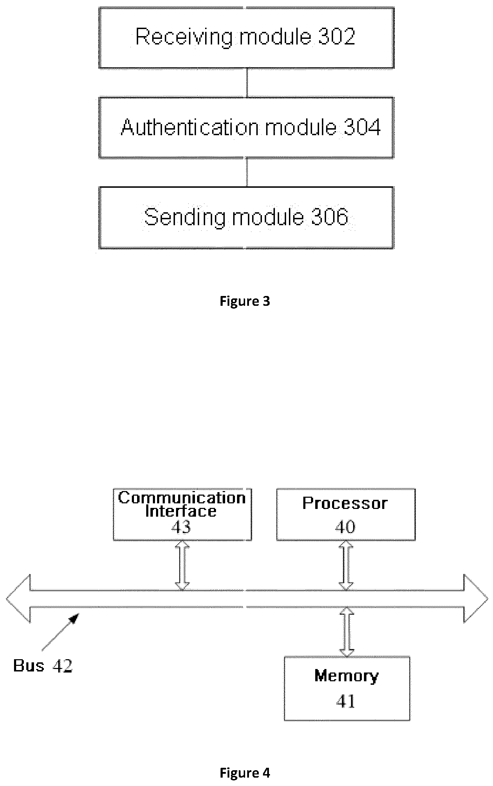

Corresponding to the aforementioned identity information authentication method, an embodiment of the present application provides an authentication device for identity information. Referring to the structural block diagram of an authentication device for identity information shown in Figure 3, the device is executed by the server, and the server is respectively connected in communication to the target authentication device and the user terminal, and the device comprises the following modules:
a receiving module 302 configured to receive a first identity information of a user to be authenticated and identification information of the target authentication device sent by the target authentication device;
wherein the identity information of the user to be authenticated comprises current biometric characteristics of the user to be authenticated; the current biological characteristics comprise current facial characteristics; the identification information of the target authentication device comprises account information of the target authentication device and location information of the target authentication device;
an authentication module 304 configured to perform a legality authentication on the first identity information of the user to be authenticated based on stored first identity information of a legal user and the identification information of the target authentication device;
a sending module 306 configured to send the authentication result to the target authentication device.

In the above-mentioned authentication device for identity information provided by the embodiment of the present application, the identity information of the user to be authenticated comprises the current biometric characteristics of the user to be authenticated, and the current biometric characteristics comprise the current facial characteristics, and the identification information of the target authentication device comprises the account of the target authentication device. When the identity information of the user to be authenticated sent by the authentication device is authenticated, it comprises the authentication of the current biological characteristics in the identity information, and takes into account the influence of the target authentication device's identification information on the current biometric authentication, which may effectively protect personal identity information, improve security, reliability and convenience of identity authentication, and enhance user experience.

The receiving module 302 is further configured for: receiving location information of the user terminal sent by the user terminal; performing a dynamic rasterization processing on the location information of the user terminal to determine a raster where the location information of the user terminal is located.

The implementation principles and technical effects of the device provided in this embodiment are the same as those of the foregoing embodiments. For a brief description, for parts not mentioned in the device embodiment, reference may be made to the corresponding content in the foregoing method embodiments.

The embodiment of the present application provides a server. Referring to the illustrative structural diagram of a server shown in Figure 4, the server comprises: a processor 40, a memory 41, a bus 42 and a communication interface 43. The processor 40 and the communication interface 43 are connected to the memory 41 through a bus 42; the processor 40 is configured to execute an executable module stored in the memory 41, such as a computer program.

The memory 41 may comprise a high-speed random access memory (RAM), and may also include a nonvolatile memory, such as at least one disk memory. The communication connection between the network element of the system and at least one other network element is realized through at least one communication interface 43 (which may be wired or wireless), and the Internet, a wide area network, a local network, a metropolitan area network etc. may be used.

The bus 42 may be an ISA bus, a PCI bus, an EISA bus etc. The bus may be divided into an address bus, a data bus, a control bus etc. For ease of presentation, only one bidirectional arrow is used to indicate in Figure 4, but it does not mean that there is only one bus or one type of bus.

The memory 41 is configured to store a program, and the processor 40 executes the program after receiving the execution instruction. The method executed a device for the flow process definition disclosed in any of the foregoing embodiments of the present application may be applied to the processor 40 or implemented by the processor 40.

The processor 40 may be an integrated circuit chip with signal processing capability. In the implementation process, each step of the above method may be completed by an integrated logic circuit of hardware in the processor 40 or instructions in the form of software. The aforementioned processor 40 may be a general-purpose processor, including a central processing unit (CPU for short) and a network processor (NP) etc.; it may also be a digital signal processor (DSP for short) , Application Specific Integrated Circuit (ASIC), Field-Programmable Gate Array (FPGA) or other programmable logic devices, discrete gates or transistor logic devices, and discrete hardware components to implement or execute the methods, steps, and logical block diagrams disclosed in the embodiments of the present application. The general-purpose processor may be a microprocessor or the processor may also be any conventional processor etc. The steps of the method disclosed in the embodiments of the present application may be directly embodied as being executed by a hardware decoding processor or by a combination of hardware and software modules in the decoding processor. The software module may be located in a mature storage medium in the field, such as a random access memory, a flash memory and/or a read-only memory, a programmable read-only memory, or an electrically erasable programmable memory and/or register. The storage medium is located in the memory 41. The processor 40 reads the information in the memory 41, and completes the steps of the above method in combination with its hardware.

The embodiment of the present application also provides a chip on which a program is stored, and the program is executed by the processor to execute the steps of any one of the foregoing embodiments.

Those skilled in the art may clearly understand that, for the convenience and conciseness of the description, the specific working process of the system described above may refer to the corresponding process in the foregoing embodiments, which will not be repeated here.

The authentication method for identity information, device, and server program product provided by the embodiments of the present application comprise a chip storing program code. The instructions included in the program code may be configured to execute the method described in the previous method embodiments. For specific implementation, the method embodiments may be referred to, which will not be repeated here.

If the function is implemented in the form of a software functional unit and sold or used as an independent product, it may be stored in a chip. Based on this understanding, the technical solution of the present application may be embodied in the form of a software product in essence or the part that contributes to the existing technology or the part of the technical solution. The software product is stored in a chip and comprises several instructions to enable a computer device (which may be a personal computer, a server, or a network device, etc.) to perform all or part of the steps of the methods described in the various embodiments of the present application.

Finally, it should be noted that the above-mentioned embodiments are only specific implementations of this application, which are used to illustrate the technical solution of this application, rather than limiting it. The scope of protection of the application is subject to the protection scope of the appending claims. J

## Claims

1. An authenticating method for identity information, **characterized in that**, the method is executed by a server, the server is respectively connected in communication to a target authentication device and a user terminal; the method comprises:
receiving a first identity information of a user to be authenticated and identification information of the target authentication device sent by the target authentication device (S102); wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device;
performing a legality authentication on the first identity information of the user to be authenticated based on stored first identity information of a legal user and the identification information of the target authentication device (S104);
sending the authentication result to the target authentication device (S106);
wherein before the receiving the first identity information of the user to be authenticated sent by the target authentication device, the method further comprises:
receiving location information of the user terminal sent by the user terminal (S202);
performing a dynamic rasterization processing on the location information of the user terminal to determine a raster where the location information of the user terminal is located (S204).

2. The method according to claim 1, **characterized in that**, the step of performing the legality authentication on the first identity information of the user to be authenticated based on the stored first identity information of the legal user and the identification information of the target authentication device (S104) comprises:
Performing a dynamic rasterization processing on the location information of the target authentication device to determine a raster where the location information of the target authentication device is located (S208);
using the raster where the location information of the target authentication device is located and a raster within a preset range of the raster where the location information of the target authentication device is located as target rasters (S210);
finding stored biometric characteristics of each user in the target rasters based on the stored first identity information of the legal user (S212);
matching the current biological characteristics of the user to be authenticated with found stored biological characteristics of each user, so as to perform the legality authentication on the first identity information of the user to be authenticated.

3. The method according to claim 2, **characterized in that**, the step of matching the current biological characteristics of the user to be authenticated with the found stored biological characteristics of each users comprises:
determining whether the current biological characteristics are biological characteristics of a living body (S214);
if yes, comparing the current biological characteristics of the user to be authenticated with the found stored biological characteristics of each user (S216);
if the comparing shows that similarities between a stored biological characteristics and the current biological characteristics are greater than a preset similarity threshold, determining an account corresponding to the stored biological characteristics with similarities greater than the preset similarity threshold as a current user account (S218);
if the comparing shows that similarities between a plurality of the stored biological characteristics and the current biological characteristic are greater than the preset similarity threshold, determining each user corresponding to each of the stored biological characteristics with similarities greater than the preset similarity threshold as a plurality of users to be authenticated (S220);
performing re-identification on the plurality of the users to be authenticated (S222); wherein the identification comprises confirming a preset number of digits in an identification card and/or a biometric matching.

4. The method according to claim 3, **characterized in that**, the user terminal of the user to be authenticated comprises a user account, and the user account of the user to be authenticated for re-identification is the current user account, and the method further comprises:
sending a request to the user terminal of the current user account to obtain a second identity information of the user; wherein the user terminal comprises the second identity information of the user, and the second identity information of the user comprises a user's name, an identification card number of the user and stored biometrics of the user;
when receiving the second identity information of the user sent by the user terminal of the current user account, determining whether the user terminal is set to allow responding to the request;
if yes, verifying a legitimacy of the second identity information;
if the second identity information is verified to be legal, sending the second identity information to the target authentication device, and generating an identity authentication log;
sending the identity information authentication log to the user terminal of the user account.

5. The method according to claim 4, **characterized in that**, after sending the request to the user terminal of the current user account to obtain the second identity information of the user, the method further comprises:
verifying the legitimacy of the second identity information through the user terminal of the current user account;
if the second identity information is legal, sending the second identity information to the server through the user terminal of the current user account.

6. The method according to claim 4, **characterized in that**, the server is further connected in communication with an identity authentication system, and the method further comprises:
if the authentication of the identity information is a second identity authentication request, after verifying that the second identity information is legal, sending the second identity information to the identity authentication system;
performing an identity verification on the second identity information through the identity authentication system to obtain an identity verification result;
sending the identity verification result to the server through the identity authentication system;
if the identity verification result contains information that the second identity information is legal, sending the second identity letter to the target authentication device, and generating an identity information authentication log;
sending the identity authentication log to the user terminal of the user account.

7. The method according to claim 4, **characterized in that**, the server is further connected in communication with an identity authentication system, and the method further comprises:
registering the second identity information on the user terminal through the identity authentication system.

8. The method according to claim 7, **characterized in that**, the step of registering the second identity information on the user terminal through the identity authentication system comprises:
receiving the second identity information sent by the user terminal;
sending the second identity information to the identity authentication system;
performing an identity verification on the second identity information through the identity authentication system;
sending an identity verification result of the second identity information to the server through the identity authentication system;
if the identity verification result contains information that the second identity information is legal, associating the stored biological characteristics of the user in the second identity information with the user account;
sending the legal identity verification result of the second identity information to the user terminal;
after receiving the legal identity verification result of the second identity information, the user terminal performs an encryption processing on the second identity information and saves the encrypted second identity information to the user terminal.

9. An authentication device for identity information, **characterized in that**, the device is executed by a server, and the server is respectively connected in communication with a target authentication device and a user terminal; the device comprises:
a receiving module (302) configured to receive a first identity information of a user to be authenticated and identification information of the target authentication device sent by the target authentication device; wherein the first identity information of the user to be authenticated comprises current biometric characteristics of the user to be authenticated; the current biological characteristics comprise current facial characteristics; the identification information of the target authentication device comprises account information of the target authentication device and location information of the target authentication device;
an authentication module (304) configured to perform a legality authentication on the first identity information of the user to be authenticated based on stored first identity information of a legal user and the identification information of the target authentication device;
a sending module (306) configured to send the authentication result to the target authentication device, wherein the authentication device is further configured to - before the receiving the first identity information of the user to be authenticated sent by the target authentication device:
receive location information of the user terminal sent by the user terminal (S202);
perform a dynamic rasterization processing on the location information of the user terminal to determine a raster where the location information of the user terminal is located (S204).

10. The device according to claim 9, **characterized in that**, the receiving module is configured to:
receiving location information of the user terminal sent by the user terminal;
performing a dynamic rasterization processing on the location information of the user terminal to determine a raster where the location information of the user terminal is located.

11. A server, **characterized in that**, comprising a processor and a memory;
a computer program is stored on the memory, and when run by the processor, the computer program executes the method according to any one of claims 1 to 8.

12. A chip with a program stored on the chip, **characterized in that**, when run by a processor, the program executes the steps of the method according to any one of claims 1 to 8.

## Patentansprüche

1. Ein Authentifizierungsverfahren für Identitätsinformationen, **dadurch gekennzeichnet, dass** das Verfahren von einem Server ausgeführt wird, wobei der Server jeweils mit einem Zielauthentifizierungsgerät und einem Benutzerterminal in Verbindung steht; das Verfahren umfasst:
Empfangen einer ersten Identitätsinformation eines zu authentifizierenden Benutzers und Identifikationsinformationen des Zielauthentifizierungsgeräts, die vom Zielauthentifizierungsgerät gesendet werden (S102); wobei die erste Identitätsinformation des zu authentifizierenden Benutzers aktuelle biometrische Merkmale des zu authentifizierenden Benutzers umfasst; die aktuellen biologischen Merkmale aktuelle Gesichtsmerkmale umfassen; die Identifikationsinformationen des Zielauthentifizierungsgeräts Kontoinformation des Zielauthentifizierungsgeräts und Standortinformation des Zielauthentifizierungsgeräts umfasst;
Durchführen einer Rechtmäßigkeitsauthentifizierung der ersten Identitätsinformation des zu authentifizierenden Benutzers auf der Grundlage der ersten gespeicherten Identitätsinformation eines rechtmäßigen Benutzers und der Identifikationsinformation des Zielauthentifizierungsgeräts (S104);
Senden des Authentifizierungsergebnisses an das Zielauthentifizierungsgerät (S106);
wobei das Verfahren vor dem Empfang der ersten Identitätsinformation des zu authentifizierenden Benutzers, die vom Zielauthentifizierungsgerät gesendet werden, ferner umfasst:
Empfangen von Standortinformation des Benutzerterminals, die vom Benutzerterminal gesendet werden (S202):
Durchführen einer dynamischen Rasterungsverarbeitung der Standortinformation des Benutzerterminals, um ein Raster zu bestimmen, in dem sich die Standortinformation des Benutzerterminals befindet (S204).

2. Verfahren nach Anspruch 1, **dadurch gekennzeichnet, dass** der Schritt der Durchführung der Rechtmäßigkeitsauthentifizierung für die erste Identitätsinformation des zu authentifizierenden Benutzers auf Grundlage der gespeicherten ersten Identitätsinformation des rechtmäßigen Benutzers und der Identitätsinformation des Zielauthentifizierungsgeräts (S104) umfasst:
Durchführen einer dynamischen Rasterverarbeitung der Standortinformation des Zielauthentifizierungsgeräts, um ein Raster zu bestimmen, in dem sich die Standortinformation des Zielauthentifizierungsgeräts befindet (S208);
Verwenden des Rasters, in dem sich die Standortinformation des Zielauthentifizierungsgeräts befindet, und eines Rasters innerhalb eines voreingestellten Bereichs des Rasters, in dem sich die Standortinformation des Zielauthentifizierungsgeräts befindet, als Zielraster (S210);
Auffinden gespeicherter biometrischer Merkmale jedes Benutzers in den Zielrastern auf der Grundlage der gespeicherten ersten Identitätsinformation des rechtmäßigen Benutzers (S212);
Abgleichen der aktuellen biologischen Merkmale des zu authentifizierenden Benutzers mit den gefundenen gespeicherten biologischen Merkmalen jedes Benutzers, um die Rechtmäßigkeitsauthentifizierung der ersten Identitätsinformation des zu authentifizierenden Benutzers durchzuführen.

3. Verfahren nach Anspruch 2, **dadurch gekennzeichnet, dass** der Schritt des Abgleichens der aktuellen biologischen Merkmale des zu authentifizierenden Benutzers mit den gefundenen gespeicherten Merkmalen jedes Benutzers umfasst:
Bestimmen, ob die aktuellen biologischen Merkmale biologische Merkmale eines lebenden Körpers sind (S214);
wenn ja, Vergleichen der aktuellen biologischen Merkmale des zu authentifizierenden Benutzers mit den gefundenen gespeicherten biologischen Merkmalen jedes Benutzers (S216);
wenn der Vergleich ergibt, dass die Ähnlichkeiten zwischen einem gespeicherten biologischen Merkmal und den aktuellen biologischen Merkmalen größer sind, als ein voreingestellter Ähnlichkeitsschwellenwert, das Bestimmen eines Kontos, das dem gespeicherten biologischen Merkmal mit Ähnlichkeiten größer als dem voreingestellten Ähnlichkeitsschwellenwert entspricht, als aktuelles Benutzerkonto (S218);
wenn der Vergleich ergibt, dass die Ähnlichkeiten zwischen einer Vielzahl der gespeicherten biologischen Merkmale und dem aktuellen biologischen Merkmal größer sind, als der voreingestellte Ähnlichkeitsschwellenwert, Bestimmen jedes Benutzers, der jedem der gespeicherten biologischen Merkmale mit Ähnlichkeiten größer als dem voreingestellten Ähnlichkeitsschwellenwert entspricht, als eine Vielzahl von zu authentifizierenden Benutzern (S220);
Durchführung einer erneuten Identifizierung der mehreren zu authentifizierenden Benutzern (S222); wobei die Identifizierung die Bestätigung einer voreingestellten Anzahl von Ziffern in einem Ausweis und/oder einem biometrischen Abgleich umfasst.

4. Verfahren nach Anspruch 3, **dadurch gekennzeichnet, dass** das Benutzerterminal des zu authentifizierenden Benutzers ein Benutzerkonto umfasst und das Benutzerkonto des zu authentifizierenden Benutzers zur erneuten Identifizierung das aktuelle Benutzerkonto ist, und das Verfahren ferner umfasst:
Senden einer Anfrage an das Benutzerterminal des aktuellen Benutzerkontos, um eine zweite Identitätsinformation des Benutzers zu erhalten; wobei das Benutzerterminal die zweite Identitätsinformation des Benutzers umfasst und die zweite Identitätsinformation des Benutzers einen Benutzernamen, eine Ausweisnummer des Benutzers und gespeicherte biometrische Daten des Benutzers umfasst;
beim Empfang der zweiten Identifikationsinformation des Benutzers, die vom Benutzerterminal des aktuellen Benutzerkontos gesendet wurde, Bestimmen, ob das Benutzerterminal so eingestellt ist, dass es auf die Anfrage antworten kann;
wenn ja, Überprüfen der Rechtmäßigkeit der zweiten Identitätsinformation;
wenn die zweite Identitätsinformation als rechtmäßig überprüft wurde, Senden der zweiten Identitätsinformation an das Zielauthentifizierungsgerät und Erzeugen eines Identitätsauthentifizierungsprotokolls;
Senden des Identitätsinformationsauthentifizierungsprotokolls an das Benutzerterminal des Benutzerkontos.

5. Verfahren nach Anspruch 4, **dadurch gekennzeichnet, dass** nach dem Senden der Anfrage an das Benutzerterminal des aktuellen Benutzerkontos, um die zweite Identitätsinformation des Benutzers zu erhalten, das Verfahren ferner umfasst:
Überprüfen der Rechtmäßigkeit der zweiten Identitätsinformation über das Benutzerterminal des aktuellen Benutzerkontos;
wenn die zweite Identitätsinformation rechtmäßig ist, Senden der zweiten Identitätsinformation an den Server über das Benutzerterminal des aktuellen Benutzerkontos.

6. Verfahren nach Anspruch 4, **dadurch gekennzeichnet, dass** der Server ferner mit einem Identitätsauthentifizierungssystem verbunden ist und das Verfahren ferner umfasst:
wenn die Authentifizierung der Identitätsinformation eine zweite Identitätsauthentifizierungsanforderung ist, nach Überprüfung, dass die zweite Identitätsinformation rechtmäßig ist, Senden der zweiten Identitätsinformation an das Identitätsauthentifizierungssystem;
Durchführen einer Identitätsüberprüfung der zweiten Identitätsinformation durch das Identitätsauthentifizierungssystem, um ein Identitätsüberprüfungsergebnis zu erhalten;
Senden des Identitätsüberprüfungsergebnisses über das Identitätsauthentifizierungssystem an den Server;
wenn das Identitätsüberprüfungsergebnis Informationen enthält, dass die zweite Identitätsinformation rechtmäßig ist, Senden des zweiten Identitätsbriefs an das Zielauthentifizierungsgerät und Erzeugen eines Identitätsinformationsauthentifizierungsprotokolls;
Senden des Identitätsauthentifizierungsprotokolls an das Benutzerterminal des Benutzerkontos.

7. Verfahren nach Anspruch 4, **dadurch gekennzeichnet, dass** der Server ferner mit einem Identitätsauthentifizierungssystem verbunden ist und das Verfahren ferner umfasst:
Registrieren der zweiten Identitätsinformation auf dem Benutzerterminal über das Identitätsauthentifizierungssystem.

8. Verfahren nach Anspruch 7, **dadurch gekennzeichnet, dass** der Schritt des Registrierens der zweiten Identitätsinformation auf dem Benutzerterminal über das Identitätsauthentifizierungssystem umfasst:
Empfangen der vom Benutzerterminal gesendeten zweiten Identitätsinformation;
Senden der zweiten Identitätsinformation an das Identitätsauthentifizierungssystem;
Durchführen einer Identitätsüberprüfung der zweiten Identitätsinformation über das Identitätsauthentifizierungssystem;
Senden eines Identitätsüberprüfungsergebnisses der zweiten Identitätsinformation an den Server über das Identitätsauthentifizierungssystem;
wenn das Identitätsüberprüfungsergebnis Information enthält, dass die zweite Identitätsinformation rechtmäßig ist, das Zuordnen der gespeicherten biologischen Merkmale des Benutzers in der zweiten Identitätsinformation zum Benutzerkonto;
das Senden des rechtmäßigen Identitätsüberprüfungsergebnisses der zweiten Identitätsinformation an das Benutzerterminal;
nach dem Empfang des rechtmäßigen Identitätsüberprüfungsergebnisses der zweiten Identitätsinformation führt das Benutzerterminal eine Verschlüsselungsverarbeitung der zweiten Identitätsinformation durch und speichert die verschlüsselte zweite Identitätsinformation auf dem Benutzerterminal.

9. Ein Authentifizierungsgerät für Identitätsinformationen, **dadurch gekennzeichnet, dass** das Gerät von einem Server ausgeführt wird und der Server jeweils mit einem Zielauthentifizierungsgerät und einem Benutzerterminal in Verbindung steht; das Gerät umfasst:
ein Empfangsmodul (302), das so konfiguriert ist, dass es eine erste Identitätsinformation eines zu authentifizierenden Benutzers und Identifikationsinformationen des Zielauthentifizierungsgeräts empfängt, die vom Zielauthentifizierungsgerät gesendet werden; wobei die erste Identitätsinformation des zu authentifizierenden Benutzers aktuelle biometrische Merkmale des zu authentifizierenden Benutzers umfassen; die aktuellen biologischen Merkmale aktuelle Gesichtsmerkmale umfassen; die Identifikationsinformationen des Zielauthentifizierungsgeräts Kontoinformation des Zielauthentifizierungsgeräts und Standortinformation des Zielauthentifizierungsgeräts umfassen;
ein Authentifizierungsmodul (304), das so konfiguriert ist, dass es eine Rechtmäßigkeitsauthentifizierung der ersten Identitätsinformation des zu authentifizierenden Benutzers auf der Grundlage der gespeicherten ersten Identitätsinformation eines rechtmäßigen Benutzers und der Identifikationsinformation des Zielauthentifizierungsgeräts durchführt;
ein Sendemodul (306), das so konfiguriert ist, dass es das Authentifizierungsergebnis an das Zielauthentifizierungsgerät sendet, wobei das Authentifizierungsgerät ferner so konfiguriert ist, dass es - vor dem Empfang der ersten Identitätsinformation des zu authentifizierenden Benutzers, die vom Zielauthentifizierungsgerät gesendet werden:
Standortinformation des Benutzerterminals empfängt, die vom Benutzerterminal gesendet werden (S202);
eine dynamische Rasterverarbeitung der Standortinformation des Benutzerterminals durchzuführen, um ein Raster zu bestimmen, in dem sich die Standortinformation des Benutzerterminals befindet (S204).

10. Vorrichtung nach Anspruch 9, **dadurch gekennzeichnet, dass** das Empfangsmodul so konfiguriert ist, dass es:
Standortinformation des Benutzerterminals empfängt, die vom Benutzerterminal gesendet werden;
eine dynamische Rasterverarbeitung der Standortinformation des Benutzerterminals durchführt, um ein Raster zu bestimmen, in dem sich die Standortinformation des Benutzerterminals befinden.

11. Ein Server, **dadurch gekennzeichnet, dass** er einen Prozessor und einen Speicher umfasst;
ein Computerprogramm auf dem Speicher gespeichert ist und, wenn es vom Prozessor ausgeführt wird, das Computerprogramm das Verfahren gemäß einem der Ansprüche 1 bis 8 ausführt.

12. Ein Chip mit einem auf dem Chip gespeicherten Programm, **dadurch gekennzeichnet, dass** das Programm, wenn es von einem Prozessor ausgeführt wird, die Schritte des Verfahrens gemäß einem der Ansprüche 1 bis 8 ausführt.

## Revendications

1. Procédé d'authentification pour des informations d'identité, **caractérisé en ce que** le procédé est exécuté par un serveur, le serveur est respectivement connecté en communication à un dispositif d'authentification cible et un terminal d'utilisateur ; le procédé comprend :
recevoir une première information d'identité d'un utilisateur devant être authentifié et des informations d'identité du dispositif d'authentification cible envoyées par le dispositif d'authentification cible (S102) ; dans lequel la première information d'identité de l'utilisateur devant être authentifié comprend des caractéristiques biométriques actuelles de l'utilisateur devant être authentifié ; les caractéristiques biologiques actuelles comprennent des caractéristiques faciales actuelles ; les informations d'identification du dispositif d'authentification cible comprennent des informations de compte du dispositif d'authentification cible et des informations d'emplacement du dispositif d'authentification cible ;
réaliser une authentification de légalité sur la première information d'identité de l'utilisateur devant être authentifié en fonction de premières informations d'identité stockées d'un utilisateur légal et des informations d'identification du dispositif d'authentification cible (S104) ;
envoyer le résultat d'authentification au dispositif d'authentification cible (S106) ;
dans lequel avant la réception de la première information d'identité de l'utilisateur devant être authentifié envoyée par le dispositif d'authentification cible, le procédé comprend en outre :
recevoir des informations d'emplacement du terminal d'utilisateur envoyées par le terminal d'utilisateur (S202) ;
réaliser un traitement de tramage dynamique sur les informations d'emplacement du terminal d'utilisateur pour déterminer une trame où les informations d'emplacement du terminal d'utilisateur sont situées (S204).

2. Procédé selon la revendication 1, **caractérisé en ce que** l'étape de réalisation de l'authentification de légalité sur la première information d'identité de l'utilisateur devant être authentifié en fonction de la première information d'identité stockée de l'utilisateur légal et des informations d'identification du dispositif d'authentification cible (S104) comprend :
réaliser un traitement de tramage dynamique sur les informations d'emplacement du dispositif d'authentification cible pour déterminer une trame où les informations d'emplacement du dispositif d'authentification cible sont situées (S208) ;
utiliser la trame où les informations d'emplacement du dispositif d'authentification cible sont situées et une trame au sein d'une plage prédéfinie de la trame où les informations d'emplacement du dispositif d'authentification cible sont situées comme trames cibles (S210) ;
trouver des caractéristiques biométriques stockées de chaque utilisateur dans les trames cibles en fonction de la première information d'identité stockée de l'utilisateur légal (S212) ;
faire correspondre les caractéristiques biologiques actuelles de l'utilisateur devant être authentifié avec des caractéristiques biologiques stockées trouvées de chaque utilisateur de manière à réaliser l'authentification de légalité sur la première information d'identité de l'utilisateur devant être authentifié.

3. Procédé selon la revendication 2, **caractérisé en ce que** l'étape de mise en correspondance des caractéristiques biologiques actuelles de l'utilisateur devant être authentifié avec les caractéristiques biologiques stockées trouvées de chaque utilisateur comprend :
déterminer si les caractéristiques biologiques actuelles sont des caractéristiques biologiques d'un corps vivant (S214) ;
si c'est le cas, comparer les caractéristiques biologiques actuelles de l'utilisateur devant être authentifié aux caractéristiques biologiques stockées trouvées de chaque utilisateur (S216) ;
si la comparaison montre que des similarités entre des caractéristiques biologiques stockées et les caractéristiques biologiques actuelles sont supérieures à un seuil de similarité prédéfini, déterminer un compte correspondant aux caractéristiques biologiques stockées avec des similarités supérieures au seuil de similarité prédéfini comme un compte utilisateur actuel (S218) ;
si la comparaison montre que des similarités entre une pluralité des caractéristiques biologiques stockées et la caractéristique biologique actuelle sont supérieures au seuil de similarité prédéfini, déterminer chaque utilisateur correspondant à chacune des caractéristiques biologiques stockées avec des similarités supérieures au seuil de similarité prédéfini comme une pluralité d'utilisateurs devant être authentifiés (S220) ;
réaliser la réidentification sur la pluralité des utilisateurs devant être authentifiés (S222) ; dans lequel l'identification comprend confirmer un nombre de chiffres prédéfini dans une carte d'identité et/ou une correspondance biométrique.

4. Procédé selon la revendication 3, **caractérisé en ce que** le terminal d'utilisateur de l'utilisateur devant être authentifié comprend un compte utilisateur, et le compte utilisateur de l'utilisateur devant être authentifié pour la réidentification est le compte utilisateur actuel, et le procédé comprend en outre :
envoyer une requête au terminal d'utilisateur du compte utilisateur actuel pour obtenir une seconde information d'identité de l'utilisateur ; dans lequel le terminal d'utilisateur comprend la seconde information d'identité de l'utilisateur, et la seconde information d'identité de l'utilisateur comprend un nom d'utilisateur, un numéro de carte d'identité de l'utilisateur et la biométrie stockée de l'utilisateur ;
lors de la réception de la seconde information d'identité de l'utilisateur envoyée par le terminal d'utilisateur du compte utilisateur actuel, déterminer si le terminal d'utilisateur est réglé pour permettre de répondre à la requête ;
si c'est le cas, vérifier un légitimité de la seconde information d'identité ;
si la seconde information d'identité est vérifiée comme étant légale, envoyer la seconde information d'identité au dispositif d'authentification cible et générer un journal d'authentification d'identité ;
envoyer le journal d'authentification d'informations d'identité au terminal d'utilisateur du compte utilisateur.

5. Procédé selon la revendication 4, **caractérisé en ce qu'**après l'envoi de la requête au terminal d'utilisateur du compte utilisateur actuel pour obtenir la seconde information d'identité de l'utilisateur, le procédé comprend en outre :
vérifier la légitimité de la seconde information d'identité par le terminal d'utilisateur du compte utilisateur actuel ;
si la seconde information d'identité est légale, envoyer la seconde information d'identité au serveur par le terminal d'utilisateur du compte utilisateur actuel.

6. Procédé selon la revendication 4, **caractérisé en ce que** le serveur est en outre connecté en communication à un système d'authentification d'identité, et le procédé comprend en outre :
si l'authentification des informations d'identité est une seconde requête d'authentification d'identité, après vérification que la seconde information d'identité est légale, envoyer la seconde information d'identité au système d'authentification d'identité ;
réaliser une vérification d'identité sur la seconde information d'identité par le système d'authentification d'identité pour obtenir un résultat de vérification d'identité ;
envoyer le résultat de vérification d'identité au serveur par le système d'authentification d'identité ;
si le résultat de vérification d'identité contient des informations selon lesquelles la seconde information d'identité est légale, envoyer la seconde lettre d'identité au dispositif d'authentification cible et générer un journal d'authentification d'informations d'identité ;
envoyer le journal d'authentification d'identité au terminal d'utilisateur du compte utilisateur.

7. Procédé selon la revendication 4, **caractérisé en ce que** le serveur est en outre connecté en communication à un système d'authentification d'identité, et le procédé comprend en outre :
enregistrer la seconde information d'identité sur le terminal d'utilisateur par le système d'authentification d'identité.

8. Procédé selon la revendication 7, **caractérisé en ce que** l'étape d'enregistrement de la seconde information d'identité sur le terminal d'utilisateur par le système d'authentification d'identité comprend :
recevoir la seconde information d'identité envoyée par le terminal d'utilisateur ;
envoyer la seconde information d'identité au système d'authentification d'identité ;
réaliser une vérification d'identité sur la seconde information d'identité par le système d'authentification d'identité ;
envoyer un résultat de vérification d'identité de la seconde information d'identité au serveur par le système d'authentification d'identité ;
si le résultat de vérification d'identité contient des informations selon lesquelles la seconde information d'identité est légale, associer les caractéristiques biologiques stockées de l'utilisateur dans la seconde information d'identité au compte utilisateur ;
envoyer le résultat de vérification d'identité légale de la seconde information d'identité au terminal d'utilisateur ;
après réception du résultat de vérification d'identité légale de la seconde information d'identité, le terminal d'utilisateur réalise un traitement de chiffrement sur la seconde information d'identité et sauvegarde la seconde information d'identité chiffrée sur le terminal d'utilisateur.

9. Dispositif d'authentification pour des informations d'identité, **caractérisé en ce que** le dispositif est exécuté par un serveur, et le serveur est respectivement connecté en communication à un dispositif d'authentification cible et un terminal d'utilisateur ; le dispositif comprend :
un module de réception (302) configuré pour recevoir une première information d'identité d'un utilisateur devant être authentifié et des informations d'identification du dispositif d'authentification cible envoyées par le dispositif d'authentification cible ; dans lequel la première information d'identité de l'utilisateur devant être authentifié comprend des caractéristiques biométriques actuelles de l'utilisateur devant être authentifié ; les caractéristiques biologiques actuelles comprennent des caractéristiques faciales actuelles ; les informations d'identification du dispositif d'authentification cible comprennent des informations de compte du dispositif d'authentification cible et des informations d'emplacement du dispositif d'authentification cible ;
un module d'authentification (304) configuré pour réaliser une authentification de légalité sur la première information d'identité de l'utilisateur devant être authentifié en fonction de premières informations d'identité stockées d'un utilisateur légal et des informations d'identification du dispositif d'authentification cible ;
un module d'envoi (306) configuré pour envoyer le résultat d'authentification au dispositif d'authentification cible, dans lequel le dispositif d'authentification est en outre configuré pour, avant la réception de la première information d'identité de l'utilisateur devant être authentifié envoyée par le dispositif d'authentification cible :
recevoir des informations d'emplacement du terminal d'utilisateur envoyées par le terminal d'utilisateur (S202) ;
réaliser un traitement de tramage dynamique sur les informations d'emplacement du terminal d'utilisateur pour déterminer une trame où les informations d'emplacement du terminal d'utilisateur sont situées (S204).

10. Dispositif selon la revendication 9, **caractérisé en ce que** le module de réception est configuré pour :
recevoir des informations d'emplacement du terminal d'utilisateur envoyées par le terminal d'utilisateur ;
réaliser un traitement de tramage dynamique sur les informations d'emplacement du terminal d'utilisateur pour déterminer une trame où les informations d'emplacement du terminal d'utilisateur sont situées.

11. Serveur, **caractérisé en ce que**, comprenant un processeur et une mémoire ;
un programme informatique est stocké sur la mémoire, et lors de son exécution par le processeur, le programme informatique exécute le procédé selon l'une quelconque des revendications 1 à 8.

12. Puce avec un programme stocké sur la puce, **caractérisée en ce que**, lors de son exécution par un processeur, le programme exécute les étapes du procédé selon l'une quelconque des revendications 1 à 8.
